# DEMANDE DE BREVET EUROPEEN

(11) **EP 1 759 896 A2**
(43) Date de publication de la demande: **07.03.2007**
(21) Numéro de dépôt: 05301037.7
(22) Date de dépôt: 09.12.2005
(51) Int. Cl.: B60G 21/06, B60G 21/073, B60G 11/30, B60G 17/056, B60G 17/052, B60G 17/04, B60G 11/26

(54) **Dispositif de suspension hydropneumatique active pour un véhicule automobile équipé d'un tel dispositif de suspemsion**

(30) Priorité: 17.12.2004 FR 0413522
(71) Demandeur: Peugeot Citroen Automobiles SA, 78140 Vélizy-Villacoublay (FR)
(72) Inventeur: Pengov, Marc, 92500 Rueil Malmaison (FR); Nouillant, Michel, 33400 Talence (FR)

(57) **Abrégé**

L'invention concerne un dispositif de suspension hydropneumatique active pour un véhicule automobile, du type comprenant, pour chaque essieu et au niveau de chaque roue, un vérin hydraulique muni d'une chambre principale reliée à un accumulateur hydropneumatique principal (12a . 13a ; 12b, 13b) et un accumulateur hydropneumatique de compensation (15a ; 15b). Le dispositif comprend des moyens (20a ; 21a, 22a, 27a ; 20b, 21b, 22b, 27b) de contrôle de la raideur du roulis et de l'assiette du véhicule en roulis, des moyens (30a, 33a ; 30b, 33b) de contrôle du débattement des roues de chaque essieu et des moyens (40a, 42a, 44a, 46a ; 40b, 42b, 44b, 46b ; 50) de contrôle du tangage et du pompage de la caisse du véhicule automobile.

## Description

La présente invention concerne un dispositif de suspension hydropneumatique active pour un véhicule automobile.

L'invention concerne également un véhicule automobile équipé d'un tel dispositif de suspension hydropneumatique active.

Les véhicules automobiles lorsqu'ils roulent, sont soumis à diverses accélérations, et notamment à une accélération transversale faisant basculer le véhicule autour de son axe longitudinal et à une accélération longitudinale faisant basculer le véhicule autour de son axe transversal. Ces mouvements sont couramment dénommés par « roulis » et « tangage ». En plus de ces mouvements, les véhicules automobiles subissent, du fait des irrégularités de la route, du pompage, c'est-à-dire des variations de hauteur suivant un axe vertical.

Le roulis, le tangage et le pompage sont à l'origine, d'une part, de l'inconfort ressenti par le conducteur et les passagers et, d'autre part, d'une éventuelle perte possible de la tenue de route.

Actuellement la plupart des véhicules automobiles de tourisme sont équipés sur chaque roue, d'une suspension dite mécanique, c'est-à-dire composée d'un amortisseur et d'un ressort métallique. Pour améliorer la tenue en roulis, une barre anti-roulis est associée à ce type de suspension mécanique. Malheureusement, sur route dégradée et lors d'obstacles dissymétriques, le véhicule devient inconfortable par des renvois de roulis.

Ainsi, le réglage d'une telle suspension mécanique est forcément un compromis entre le confort et la tenue de route.

Pour éviter ces inconvénients, certains véhicules automobiles sont équipés d'une suspension hydropneumatique qui se compose, au niveau de chaque roue de chaque essieu, d'un vérin hydraulique muni d'une chambre principale reliée à un accumulateur hydropneumatique principal et d'un accumulateur hydropneumatique de compensation disposé entre les chambres principales des deux vérins. Chaque vérin permet le débattement de la roue correspondante. L'amortissement est réalisé à l'aide d'un étranglement limitant la circulation du fluide hydraulique entre les accumulateurs.

Afin d'établir une loi de raideur et une loi d'amortissement différentes avec ce type de suspension, et notamment pour obtenir un mode de suspension souple et un mode de suspension sportif, une régulation constituée par une électrovanne est incorporée dans le circuit de façon à permettre une circulation régulée du fluide entre les accumulateurs hydropneumatiques principaux et l'accumulateur hydropneumatique de compensation au niveau de chaque essieu. Dans le cas d'un virage, les accumulateurs principaux sont isolés par l'électrovanne de façon à empêcher la circulation du flux des roues chargées vers les roues déchargées, et ainsi limiter le roulis de la caisse du véhicule automobile.

Mais, même si ce genre de dispositif de suspension hydropneumatique permet de limiter le roulis, il ne permet pas de maintenir une hauteur constante du centre de gravité du véhicule dans toutes les conditions de circulation du véhicule. De plus, il est nécessairement associé avec une barre anti-roulis très raide pour améliorer la tenue en roulis.

L'invention a pour but de proposer une dispositif de suspension hydropneumatique active qui permet par des moyens peu coûteux de contrôler et de limiter le roulis, le tangage et le pompage du véhicule et, de ce fait, d'améliorer le confort et la tenue de route, tout en nécessitant peu d'énergie supplémentaire.

L'invention a donc pour objet un dispositif de suspension hydropneumatique active pour un véhicule automobile, du type comprenant, pour chaque essieu et au niveau de chaque roue, un vérin hydraulique muni d'une chambre principale reliée à un accumulateur hydropneumatique principal et un accumulateur hydropneumatique de compensation disposé entre les chambres principales des deux vérins, caractérisé en ce qu'il comprend :
- des moyens de contrôle de la raideur et du roulis de l'assiette de la caisse du véhicule en roulis par transfert du fluide, au niveau de chaque essieu, entre les accumulateurs hydropneumatiques principaux ou entre l'un desdits accumulateurs principaux et l'accumulateur hydropneumatique de compensation,
- des moyens de contrôle du débattement des roues de chaque essieu par retrait ou ajout du fluide dans les accumulateurs hydropneumatiques principaux et de compensation,
- des moyens de contrôle du tangage de la caisse du véhicule par retrait ou ajout de fluide dans les accumulateurs principaux et de compensation de chaque essieu indépendamment et du pompage de ladite caisse par retrait ou ajout du fluide dans lesdits accumulateurs des deux essieux simultanément.

Suivant d'autres caractéristiques de l'invention :
- les moyens de contrôle de roulis sont formés par un premier circuit de fluide comprenant, au niveau de chaque essieu, un premier et un deuxième distributeurs à tiroir interposés chacun entre un accumulateur principal et l'accumulateur de compensation, une pompe de fluide sous pression disposée en parallèle avec l'accumulateur de compensation et reliée auxdits premier et deuxième distributeurs à tiroir et un troisième distributeur à tiroir interposé entre ladite pompe et chacun desdits premier et deuxième distributeurs à tiroir,
- les premier, deuxième et troisième distributeurs à tiroir sont des distributeurs à quatre voies,
- les premier et deuxième distributeurs à tiroir sont dans une position de mise en communication des trois accumulateurs et d'isolement de la pompe de fluide sous pression pour un fonctionnement des vérins hydrauliques de chaque essieu en mode souple,
- les premier et deuxième distributeurs à tiroir sont en position d'isolement de chaque accumulateur principal pour un fonctionnement des vérins hydrauliques de chaque essieu en mode ferme,
- les trois distributeurs à tiroir sont en position de mise en communication de l'accumulateur de compensation avec l'un des deux accumulateurs principaux par l'intermédiaire de la pompe de fluide sous pression pour le contrôle du roulis au niveau de chaque essieu,
- les moyens de contrôle du débattement sont formés par un deuxième circuit de fluide comprenant, au niveau de chaque essieu, un quatrième distributeur à tiroir à quatre voies relié, d'une part, à l'entrée et à la sortie de la pompe de fluide sous pression et, d'autre part, à un réservoir de fluide et à l'accumulateur de compensation,
- les moyens de contrôle du tangage sont formés par un troisième circuit de fluide comprenant, au niveau de chaque essieu, un cinquième distributeur à quatre voies relié, d'une part, à l'entrée et à la sortie de la pompe de fluide sous pression au moyen d'un distributeur à tiroir à trois voies raccordé au troisième distributeur à tiroir et, d'autre part, au premier distributeur à tiroir par un distributeur à tiroir à deux voies et au deuxième distributeur à tiroir,
- les moyens de contrôle du pompage de la caisse sont formés par un conduit de liaison reliant le cinquième distributeur à tiroir de chaque troisième circuit de chaque essieu, et
- les entrées des accumulateurs hydropneumatiques principaux, les entrées des accumulateurs de compensation et les conduits des différents circuits comprennent un amortisseur.

L'invention a également pour objet un véhicule automobile, caractérisé en ce qu'il est équipé d'un dispositif de suspension hydropneumatique active tel que précédemment mentionné.

D'autres caractéristiques et avantages de l'invention apparaîtront à la lecture de la description qui va suivre, donnée en exemple et faite en référence aux dessins annexés, sur lesquels :
- la figure 1 est une vue schématique en perspective d'un véhicule automobile équipé d'un dispositif de suspension hydropneumatique active conforme à l'invention,
- la figure 2 est un schéma d'un dispositif de suspension hydropneumatique de type connu,
- la figure 3 est un schéma d'un dispositif de suspension hydropneumatique active conforme à l'invention,
- les figures 4, 5 et 6 sont des schémas des différents circuits composant le dispositif de suspension hydropneumatique active conforme à l'invention.

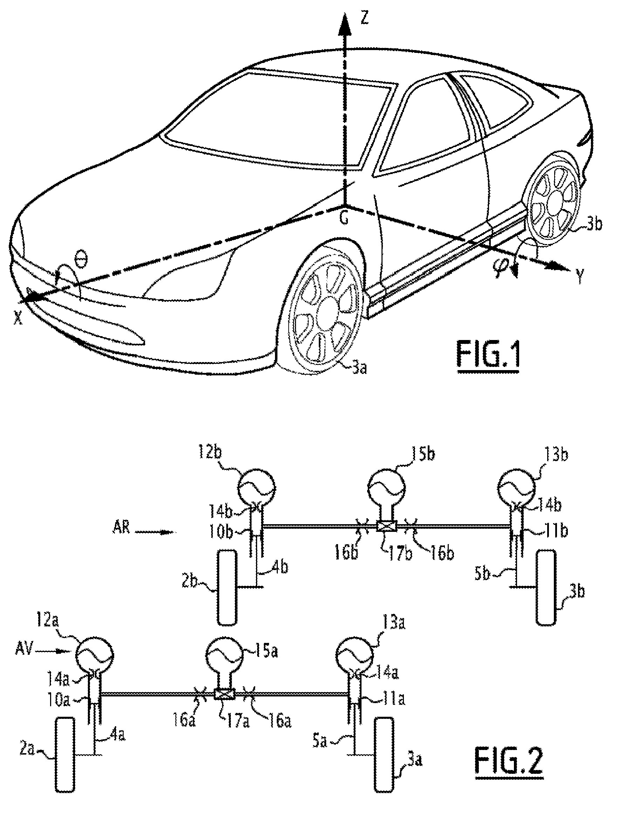

Sur la figure 1, on a représenté schématiquement un véhicule automobile 1 dont le centre de gravité est désigné par G. Ce véhicule automobile 1, lorsqu'il roule, est soumis à des accélérations et notamment à des accélérations transversales ou roulis faisant basculer la caisse du véhicule autour de son axe longitudinal X d'un angle θ et à des d'accélérations longitudinales faisant basculer la caisse du véhicule autour de son axe transversal Y d'un angle ϕ. Le basculement autour de l'axe transversal Y est appelé tangage. En plus de ces mouvements, la caisse du véhicule automobile subit, du fait des irrégularités de la route, du pompage, c'est-à-dire des variations de hauteur selon l'axe Z.

Le dispositif de suspension hydropneumatique active selon l'invention permet de diminuer et de contrôler ces différents mouvements, c'est-à-dire le roulis, le tangage et le pompage de la caisse du véhicule automobile afin d'améliorer le confort et la tenue de route de ce véhicule.

Dans la description qui suit, les termes « avant », « arrière », « droite » et « gauche » doivent être considérés par rapport à la position d'un conducteur et par rapport au sens normal de déplacement du véhicule automobile.

Le dispositif de suspension comporte un ensemble de base représenté à la figure 2, de type connu, identique pour l'essieu avant AV et pour l'essieu arrière AR.

Ainsi que montré à la figure 2, l'ensemble de base du dispositif de suspension comprend des vérins hydrauliques 10a, 11a, 10b, 11 b, associés respectivement aux roues 2a avant droite et 3a avant gauche, 2b arrière droite et 3b arrière gauche.

Les repères des éléments du dispositif de suspension de l'essieu avant AV seront associés à la lettre "a" et les éléments du dispositif de suspension de l'essieu AR seront associés à la lettre "b" dans ce qui suit.

De manière classique, le piston de chaque vérin 10a, 11a, 10b, 11 b est relié à une roue correspondante 2a, 3a, 2b, 3b, par un bras support 4a, 5a, 4b, 5b. La chambre principale de chaque vérin 10a, 11a, 10b, 11b, est reliée à un accumulateur hydropneumatique principal 12a, 13a, 12b, 13b, par l'intermédiaire d'un amortisseur 14a, 14b.

Par ailleurs, la chambre principale de chaque vérin 10a, 11a, 10b, 11b, est reliée à un accumulateur hydropneumatique de compensation 15a, 15b, également au moyen d'un amortisseur 16a, 16b et d'une électrovanne 17a, 17b.

En plus de l'ensemble de base de suspension de chaque essieu représenté à la figure 2, le dispositif de suspension comprend au niveau de l'essieu avant AV et de l'essieu arrière AR :
- un premier circuit A formant des moyens de contrôle de la raideur du roulis et de l'assiette de la caisse du véhicule en roulis,
- un deuxième circuit B formant des moyens de contrôle du débattement des roues de chaque essieu, et
- un troisième circuit C formant des moyens de contrôle du tangage de la caisse du véhicule.

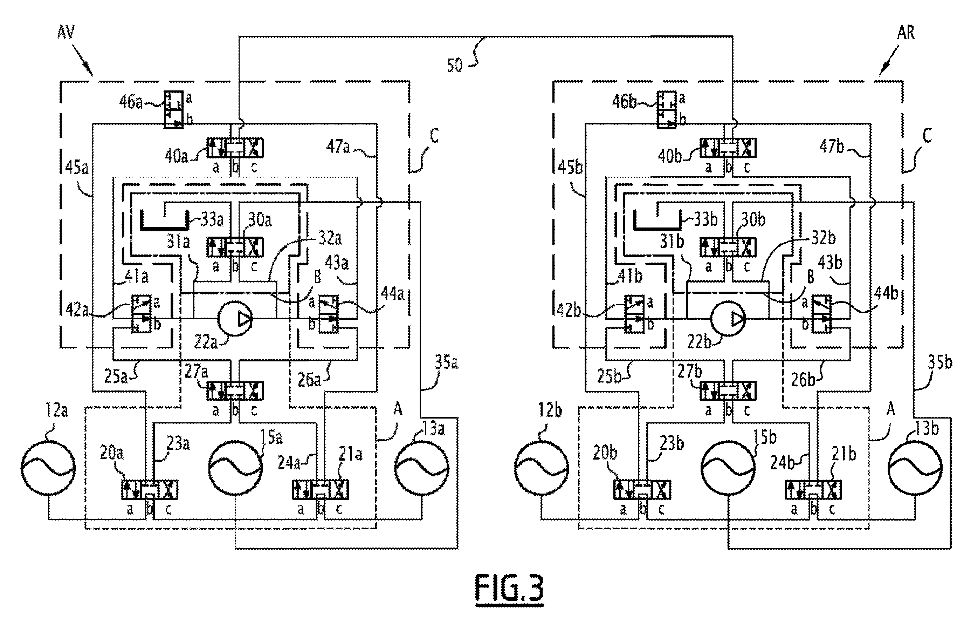

Ces circuits A, B et C représentés à la figure 3 pour chaque essieu sont identiques, c'est-à-dire respectivement pour l'essieu avant AV et pour l'essieu arrière AR et sont connectés entre eux, ainsi que montré sur cette figure.

Le dispositif de suspension conforme à l'invention comprend également des moyens de contrôle du pompage de la caisse du véhicule.

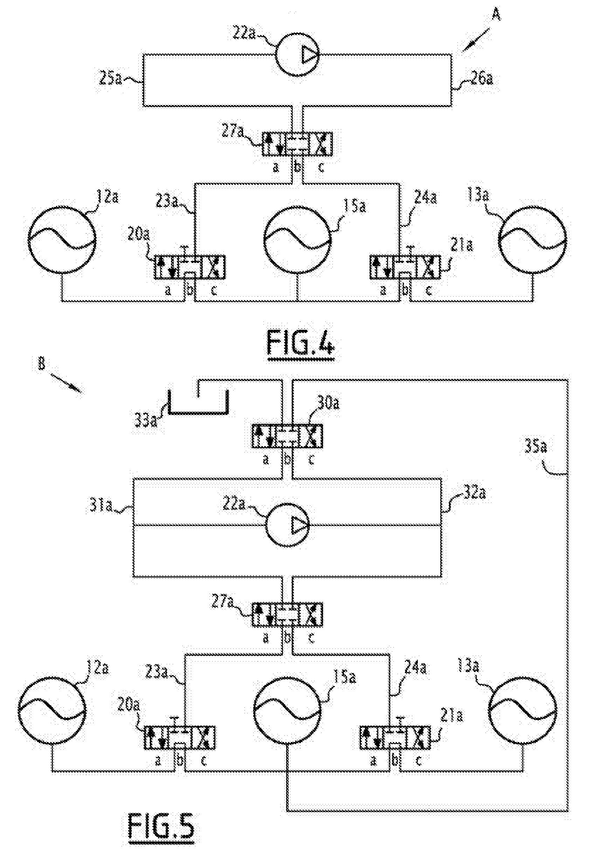

En se reportant aux figures 4, 5 et 6, on va décrire chaque circuit A, B et C par exemple pour l'essieu avant AV, les circuits étant identiques pour l'essieu arrière AR.

Le circuit A représenté à la figure 4 qui constitue des moyens de contrôle du roulis comprend un premier distributeur à tiroir 20a, disposé entre l'accumulateur avant droit 12a et l'accumulateur de compensation 15a et un deuxième distributeur à tiroir 21a interposé entre l'accumulateur principal avant gauche 13a et ledit accumulateur de compensation 15a. Ce circuit A comprend aussi une pompe de fluide sous pression 22a disposée en parallèle avec l'accumulateur de compensation 15a, et entre lesquels est interposé un troisième distributeur à tiroir 27a. Cet accumulateur à tiroir 27a est raccordé au premier distributeur 20a par un conduit 23a et au second distributeur 21a par un conduit 24a. L'entrée de la pompe de fluide sous pression 22a est raccordée au troisième distributeur 27a par un conduit 25a et la sortie de cette pompe 22a est raccordée audit troisième distributeur 27a par un conduit 26a.

Les distributeurs à tiroir 20a, 21a et 27a, sont des distributeurs à quatre voies et à trois positions, respectivement a, b et c.

Le deuxième circuit de fluide B formant les moyens de contrôle du débattement des roues de chaque essieu AV et AR par rapport à la caisse du véhicule automobile, comprend, en plus du circuit A précédemment décrit, un quatrième distributeur à tiroir 30a relié à l'entrée de la pompe de fluide sous pression 22a par un conduit 31a et à la sortie de cette pompe 22a par un conduit 32a. Ce circuit B comporte aussi un réservoir 33a de fluide couramment appelé bâche. Le quatrième distributeur 30a est raccordé au réservoir 30a par un conduit 34a et également à l'accumulateur de compensation 15a par un conduit 35a. Le distributeur à tiroir 30a est un distributeur à quatre voies et trois positions, respectivement a, b, c.

Le troisième circuit de fluide C formant les moyens de contrôle, puis du débattement de la caisse du véhicule automobile comprend un cinquième distributeur à tiroir 40a, relié à l'entrée de la pompe de fluide sous pression 22a par un conduit 41a sur lequel est disposé un distributeur à tiroir 42a. Le cinquième distributeur à tiroir 40a est relié à la sortie de la pompe de fluide sous pression 22a par un conduit 43a sur lequel est disposé un distributeur à tiroir 44a. Les conduits 25a et 26a du premier circuit A sont raccordés respectivement à l'entrée et à la sortie de la pompe 22 par l'intermédiaire des distributeurs à tiroir, respectivement 42a et 44a. Ces distributeurs à tiroir 42a et 44a sont des distributeurs à trois voies et à deux positions respectivement, a et b, tandis que le distributeur à tiroir 40a est un distributeur à quatre voies et à trois positions, respectivement a, b et c.

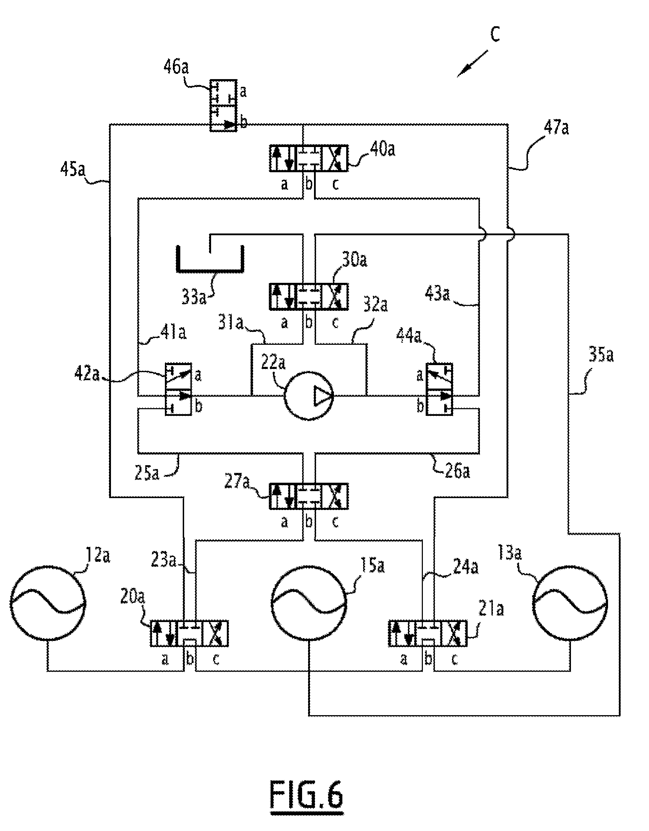

Ainsi que le montre la figure 6, le cinquième distributeur à tiroir 40a est relié au premier distributeur 20a par un conduit 45a sur lequel est placé un distributeur à tiroir 46a et ce cinquième distributeur 40a est également relié au deuxième distributeur 21 a par un conduit 47a.

Enfin, les moyens de contrôle du tangage de la caisse du véhicule sont formés, ainsi que montré à la figure 3, par un conduit de liaison 50 reliant le cinquième distributeur à tiroir 40a du troisième circuit C de l'essieu avant AV au cinquième distributeur à tiroir 40b du troisième circuit C de l'essieu arrière AR.

Les entrées des accumulateurs hydropneumatiques principaux 12a, 13a, 12b et 13b, les entrées des accumulateurs de compensation 15a et 15b et les conduits 23a, 23b, 24a, 24b, 25a, 25b, 26a, 26b, 31 a, 31 b, 32a, 32b, 35a, 35b, 41a, 41b, 43a, 43b, 45a, 45b, 47a, 47b et 50 comprennent un amortisseur.

Le dispositif de suspension ainsi décrit fonctionne de la manière suivante.

Tout d'abord, pour un fonctionnement des vérins hydrauliques 10a, 11a, 10b, 11b, des essieux AV et AR en mode souple, le distributeur 20a est dans la position b, le distributeur 21 a est dans la position b et le distributeur 27a est dans l'une des positions a, b ou c, de façon à mettre en communication les trois accumulateurs 12a, 13a et 15a et d'isoler la source de fluide sous pression 22a. Il en est de même pour l'essieu arrière AR.

Pour un fonctionnement des vérins hydrauliques 12a et 13a en mode ferme, les distributeurs 20a, 21a et 27a peuvent avoir les positions respectives suivantes "a, a et quelconque", "a, c et quelconque", "c, a et quelconque", "c , c et b". Le fonctionnement de l'essieu arrière AR en mode ferme est identique.

Le contrôle du roulis au moyen du dispositif de suspension selon l'invention est réalisé au moyen du circuit A au niveau de chaque essieu avant AV et arrière AR, les distributeurs 30a et 40a étant fermés, le distributeur 46a étant dans la position a également fermée et les distributeurs 42a et 44a étant dans la position a ne permettant pas au fluide de circuler dans les conduits 41 a et 43a.

Lors d'un virage à droite du véhicule automobile, la roue avant 2a intérieure au virage est déchargée, tandis que la roue avant 3a extérieure au virage est chargée. Les roues 2b, 3b de l'essieu arrière AR sont dans la même situation. Pour contrôler le roulis au niveau de l'essieu avant AV, les distributeurs 20a et 21a sont dans la position c et le distributeur 22a est dans la position a permettant ainsi le transfert du fluide de l'accumulateur 12a intérieur au virage vers l'accumulateur 13a extérieur à ce virage par l'intermédiaire de la pompe 22a et des conduits 23a et 24a (figure 5). Une fois l'accumulateur 13a de la roue avant 3a extérieure saturée en pression, le distributeur 21a bascule dans la position a afin d'assurer le transfert du fluide de l'accumulateur 12a intérieur au virage vers l'accumulateur de compensation 15a. Le fonctionnement est identique pour l'essieu arrière AR.

Lors d'un virage à gauche, le transfert du fluide entre les accumulateurs 12a et 13a est inversé. Les mêmes opérations sont effectuées simultanément au niveau de l'essieu arrière AR permettant ainsi au véhicule de virer à plat.

Le contrôle du débattement des roues 2a, 3a, 2b, 3b par rapport à la caisse du véhicule est réalisé au moyen des circuits A et B (Figure 5) par retrait ou par ajout de fluide.

Pour diminuer le niveau du fluide, c'est à dire pour abaisser la caisse par rapport aux roues, les distributeurs 20a, 21a et 27a sont dans la position b et le distributeur 30a est dans la position c permettant ainsi au moyen de la pompe de fluide sous pression 22a qui est en fonctionnement, de transférer du fluide du circuit A vers le réservoir 33a par les conduits 31a, 32a et 35a. Il en est de même pour l'essieu arrière AR.

A l'inverse, pour augmenter le niveau de fluide, c'est à dire augmenter le débattement entre les roues et la caisse du véhicule, les distributeurs 20a, 21 a et 27a sont dans la position b et le distributeur 30a est dans la position a afin de transférer du fluide du réservoir 33a au moyen de la source 22a vers le circuit A par les conduits 31a, 32a et 35a. Il en est de même pour l'essieu arrière AR.

Au moyen du circuit C (Figure 6) comprenant les distributeurs 40a et 46a, le transfert du fluide de l'accumulateur de compensation 15a vers les accumulateurs principaux 12a et 13a de l'essieu avant AV et de l'accumulateur de compensation 15b vers les accumulateurs principaux 12b et 13b de l'essieu arrière AR ou inversement peut-être contrôlé plus rapidement. Pour un transfert du fluide de l'accumulateur de compensation 15a vers les accumulateurs principaux 12a et 13a, les distributeurs 20a, 21a et 27a sont dans la position a, les distributeurs 30a et 46a sont dans la position b, le distributeur 40a est dans la position c, le distributeur 42a est dans la position a et le distributeur 44a est dans la position b.

Inversement pour le transfert du fluide des accumulateurs principaux 12a et 13a vers l'accumulateur de compensation 15a, les distributeurs 20a, 21 a et 27a sont dans la position a, les distributeurs 30a et 46a sont la position b, le distributeur 40a est dans la position a, le distributeur 42a est dans la position b et le distributeur 44a est dans la position a.

Lors d'un freinage, l'avant du véhicule s'enfonce et l'arrière monte. Le contrôle du tangage ainsi créé s'effectue en deux phases, la première phase consiste, d'une part, à soulever l'avant de ce véhicule et, d'autre part, à abaisser l'arrière ainsi que cela a été décrit précédemment pour le contrôle de la hauteur de la caisse du véhicule par rapport aux roues. Comme les distributeurs 40a et 40b, respectivement de l'essieu avant AV et de l'essieu arrière AR sont en position c et a, le fluide ne circule pas entre les circuits de ces essieux avant et arrière.

La deuxième phase consiste à mettre en communication les circuits de l'essieu avant avec les circuits de l'essieu arrière lors de fortes amplitudes. Pour cela, les distributeurs des circuits sont placés dans les positions suivantes : les distributeurs 20a, 21a et 22a sont dans la position a, le distributeur 30a est dans la position b, le distributeur 46a est dans la position a, le distributeur 40a est dans la position c, le distributeur 42a est dans la position b, le distributeur 44a est dans la position a, les distributeurs 20b et 21 b sont en position a, le distributeur 22b est dans une position quelconque, les distributeurs 30b et 46b sont en position b, le distributeur 40b est en position a et les distributeurs 42b, 44b sont en position b afin de transférer le fluide des accumulateurs 12b et 13b de l'essieu arrière AR vers l'accumulateur de compensation 15a de l'essieu avant AV en mettant en communication les circuits des essieux avant et arrière par l'intermédiaire du conduit de liaison 50 (figure 3).

Dans le cas d'un cabrage de la caisse du véhicule, la position des tiroirs des distributeurs des circuits A, B et C est inversée entre l'essieu avant AV et l'essieu arrière AR.

Le contrôle du pompage de la caisse du véhicule automobile est réalisé soit par l'application de l'augmentation de la hauteur de la caisse aux deux essieux, soit par l'application de la diminution de cette hauteur, comme décrit précédemment. Il en est de même pour le contrôle de la hauteur du véhicule en appliquant les procédures précédemment décrites aux essieux avant AV et arrière AR, les distributeurs 46a et 46b étant en position a, les distributeurs 40a et 40b, 42a et 42b et 44a et 44b étant en position b.

Selon une variante, au lieu d'utiliser une pompe de fluide sous pression par essieu, plusieurs pompes de plus petites cylindrées peuvent être combinées en parallèle.

Ainsi, le transfert d'un juste débit de fluide de la roue déchargée vers la roue chargée lors d'un virage du véhicule permet de limiter, voire d'annuler le roulis de la caisse de ce véhicule de telle sorte qu'il tourne à plat. De même en reliant les circuits hydrauliques des essieux avant et arrière et en effectuant un transfert de fluide, on peut contrôler et commander le tangage.

Enfin, l'ajout d'un accumulateur de compensation au niveau de chaque essieu permet alors de combler et de commander le pompage.

Le dispositif de suspension selon l'invention procure donc un moyen d'action actif sur le roulis, le tangage et le pompage ce qui permet de contrôler en temps réel l'assiette du véhicule en assurant en même temps le confort et la tenue de route. De plus, le dispositif selon l'invention permet de compenser de manière active le roulis ce qui permet de diminuer le diamètre de la barre anti-roulis et donc de diminuer sa raideur. De ce fait, les renvois de roulis sont très diminués.

La position des distributeurs des différents circuits des deux essieux ainsi que la commande des pompes de fluide sous pression et notamment la vitesse et le débit du fluide sont obtenus à partir de divers paramètres pris séparément ou en combinaison, comme par exemple, l'angle du volant, l'accélération transversale, la vitesse du véhicule, les débattements entre les roues et la caisse du véhicule, la vitesse de lacet, le rapport de boîte, le régime moteur, la pente, le dévers, la vitesse du volant, le couple du volant.

## Revendications

1. Dispositif de suspension hydropneumatique active pour un véhicule automobile, du type comprenant, pour chaque essieu et au niveau de chaque roue (2a, 3a ; 2b, 3b), un vérin hydraulique (10a, 11a ; 10b, 11 b) muni d'une chambre principale reliée à un accumulateur hydropneumatique principal (12a, 13a ; 12b, 13b) et un accumulateur hydropneumatique de compensation (15a ; 15b) disposé entre les chambres principales des deux vérins d'un même essieu, **caractérisé en ce qu'**il comprend :
- des moyens (20, 21 a, 27a, 22a ; 20b, 21 b, 27b, 22b) de contrôle de la raideur du roulis et de l'assiette de la caisse du véhicule en roulis par transfert du fluide, au niveau de chaque essieu, entre les accumulateurs hydropneumatiques principaux (12a, 13A ; 12b, 13b) ou entre l'un desdits accumulateurs principaux (12a, 13a ; 12b, 13b) et l'accumulateur hydropneumatique de compensation (15a ; 15b),
- des moyens (30a, 33a ; 30b, 33b) de contrôle du débattement des roues (2a, 3a ; 2b, 3b) de chaque essieu par retrait ou ajout de fluide dans les accumulateurs hydropneumatiques principaux (12a, 13a ; 12b, 13b) et de compensation (15a ; 15b), et
- des moyens (40a, 42a, 44a, 46a ; 40b, 42b, 44b ; 50) du contrôle du tangage de la caisse du véhicule par retrait ou ajout de fluide dans les accumulateurs hydropneumatiques principaux (12a, 13a ; 12b, 13b) et de compensation (15a ; 15b) de chaque essieu indépendamment et du pompage de ladite caisse par retrait ou ajout de fluide dans lesdits accumulateurs (12a, 13a, 15a ; 12b, 13b, 15b) des deux essieux simultanément.

2. Dispositif selon la revendication 1, **caractérisé en ce que** les moyens de contrôle du roulis sont formés par un premier circuit de fluide A comprenant, au niveau de chaque essieu, un premier et un deuxième distributeurs à tiroir (20a, 21a ; 20b, 21b) interposés chacun entre un accumulateur principal (12a, 13a ; 12b, 13b) et l'accumulateur de compensation (15a ; 15b), une pompe de fluide sous pression (22a ; 22b) disposée en parallèle avec l'accumulateur de compensation (15a, 15b) et reliée auxdits premier et deuxième distributeurs à tiroir (20a, 21a ; 20b, 21b) et un troisième distributeur à tiroir (22a, 22b) interposé entre ladite pompe (22a, 22b) et chacun desdits premier et deuxième distributeurs à tiroir (22a, 21 a ; 20b, 21 b).

3. Dispositif selon la revendication 2, **caractérisé en ce que** les premier, deuxième et troisième distributeurs à tiroir (20a, 21a, 22a ; 20b, 21b, 22b) sont des distributeurs à quatre voies.

4. Dispositif selon la revendication 2 ou 3, **caractérisé en ce que**, pour un fonctionnement des vérins hydrauliques (10a, 11a ; 10b, 11 b) de chaque essieu en mode souple, les premier et deuxième distributeurs à tiroir (20a, 21 a ; 20b, 21 b) sont dans une position de mise en communication des trois accumulateurs (12a, 13a, 15a ; 12b, 13b, 15b) et d'isolement de la pompe de fluide sous pression (22a ; 22b).

5. Dispositif selon la revendication 2 ou 3, **caractérisé en ce que**, pour un fonctionnement des vérins hydrauliques (10a, 11a ; 10b, 11 b) de chaque essieu en mode ferme, les premier et deuxième distributeurs à tiroir (20a, 21 a; 20b, 21 b) sont dans une position d'isolement de chaque accumulateur principal (12a, 13a ; 12b, 13b).

6. Dispositif selon la revendication 2 ou 3, **caractérisé en ce que**, pour le contrôle du roulis au niveau de chaque essieu, les trois distributeurs (20a, 21a, 22a ; 20b, 21b, 22b) sont en position de mise en communication de l'accumulateur de compensation (15a ; 15b) avec l'un des accumulateurs principaux (12a, 13a ; 12b, 13b) par l'intermédiaire de la pompe de fluide sous pression (22a ; 22b).

7. Dispositif selon l'une quelconque des revendications 1 à 6, **caractérisé en ce que** les moyens de contrôle du débattement sont formés par un deuxième circuit B de fluide comprenant, au niveau de chaque essieu, un quatrième distributeur à tiroir (30a ; 30b) à quatre voies, relié, d'une part, à l'entrée et à la sortie de la pompe de fluide sous pression (22a ; 22b) et, d'autre part, à un réservoir de fluide (33a ; 33b) et à l'accumulateur de compensation (15a, 15b).

8. Dispositif selon l'une quelconque des revendications 1 à 7, **caractérisé en ce que** les moyens de contrôle du tangage sont formés par un troisième circuit C de fluide comprenant, au niveau de chaque essieu, un cinquième distributeur à tiroir (40a ; 40b) à quatre voies, relié d'une part, à l'entrée et à la sortie de la pompe de fluide sous pression (22a ; 22b) au moyen d'un distributeur à tiroir (42a, 44a ; 42b, 44b) à trois voies raccordé au troisième distributeur à tiroir (22a ; 22b) et, d'autre part, au premier distributeur à tiroir (20a ; 20b) par un distributeur à tiroir (46a ; 46b) à deux voies et au deuxième distributeur à tiroir (21 a ; 21 b).

9. Dispositif selon l'une quelconque des revendications 1 à 8, **caractérisé en ce que** les moyens de contrôle du pompage de la caisse sont formés par un conduit (50) de liaison relié le cinquième distributeur à tiroir (40a ; 40b) de chaque troisième circuit C de chaque essieu.

10. Dispositif selon l'une quelconque des revendications 1 à 9, **caractérisé en ce que** les entrées des accumulateurs hydropneumatiques principaux (12a, 13a, 12b, 13b), les entrées des accumulateurs de compensation (15a, 15b) et les conduits (23a, 23b, 24a, 24b, 25a, 25b, 26a, 26b, 31 a, 31b, 32a, 32b, 35a, 35b, 41 a, 41 b, 43a, 43b, 45a, 45b, 47a, 47b, 50) comprennent un amortisseur.

11. Véhicule automobile, **caractérisé en ce qu'**il est équipé d'un dispositif de suspension hydropneumatique active selon l'une quelconque des revendications précédentes.
